# EUROPÄISCHE PATENTANMELDUNG

(11) **EP 1 085 641 A1**
(43) Veröffentlichungstag der Anmeldung: **21.03.2001**
(21) Anmeldenummer: 99118212.2
(22) Anmeldetag: 14.09.1999
(51) Int. Cl.: H02K 7/108, F16D 7/02

(54) **Antriebsvorrichtung für ein Stellglied**

(71) Anmelder: Siemens Building Technologies AG, 6300 Zug (CH)
(72) Erfinder: Studer,Werner, 6315 Oberägeri (CH); Lechner,Hubert, 6300 Zug (CH)

(57) **Zusammenfassung**

Eine Antriebsvorrichtung (15) für ein Stellglied verfügt über einen Energiespeicher, durch dessen Energie das Stellglied bei einem Ausfall des elektrischen Versorgungsnetzes in eine vorbestimmte Sicherheitsstellung positionierbar ist. Eine Hilfsfeder (6) zur Generierung eines Antriebstosses ist an einem ihrer beiden Enden (11; 12) als Schlingfeder und am andern Ende als Spreizfeder ausgeführt. Eine erste Kopplung der Hilfsfeder wird als Freilaufkupplung wirksam, wenn das Stellglied die vorbestimmte Sicherheitsstellung erreicht, und eine zweite Kopplung der Hilfsfeder ist als Überlastkupplung wirksam, wenn das Stellglied eine weitere vorbestimmte Stellung erreicht.

## Beschreibung

Die Erfindung bezieht sich auf eine Antriebsvorrichtung gemäss dem Oberbegriff des Anspruchs 1.

Solche Antriebsvorrichtungen werden vorteilhaft in Heizungs-, Lüftungs- und Klimaanlagen zur Betätigung von Stellgliedern wie Klappen, Ventile oder Schieber und dergleichen verwendet.

Eine Antriebsvorrichtung der im Oberbegriff des Anspruchs 1 genannten Art ist aus der DE 195 16 973 A1 bekannt. Die bekannte Antriebsvorrichtung weist eine Rückstellfeder und auch eine Hilfsfeder zur Überwindung eines Haftmoments- und eines Rastmoments von Getriebe und elektromagnetischem Antriebsmotor auf. Die Rückstellfeder hat bei Stromausfall ein zum Betätigen eines Stellgliedes erforderliches Drehmoment aufzubringen. Durch den Einsatz der Hilfsfeder kann die Rückstellfeder für ein relativ kleines Drehmoment ausgelegt werden, wobei Raum, Material und Kosten eingespart werden. Dadurch, dass die bekannte Hilfsfeder als Schlingfeder verwirklicht ist, weist die Hilfsfeder zudem die Funktion einer Freilaufkupplung auf, durch welche Schäden insbesondere am Getriebe verhindert werden, wenn das Stellglied bei Stromausfall die vorbestimmte Sicherheitsstellung erreicht, da die rotierende Schwungmasse des Antriebsmotors über die als Freilaufkupplung wirkende Hilfsfeder bis zum Stillstand auslauffähig ist.

Unterschiedliche Ausführungsformen von Schlingfederkupplungen sind beispielsweise aus EP 678 685 A1, aus US 3 125 889, aus US 3 893 554, aus EP 463 248 A1 und US 4 630 722 bekannt.

Die bekannte Antriebsvorrichtung hat den Nachteil, dass neben der als Hilfsfeder und Freilaufkupplung wirkenden Schlingfeder zusätzlich eine Überlastkupplung zur Verhinderung von Schäden am Getriebe notwendig ist. Die Überlastkupplung kommt dann zum Einsatz, wenn das Stellglied eine gewisse Endstellung erreicht und der Antriebsmotor das Stellglied weiter gegen einen Anschlag treibt.

Der Erfindung liegt die Aufgabe zugrunde, eine Antriebsvorrichtung vorzuschlagen, welche ohne an Funktionalität und Zuverlässigkeit einzubüssen einen einfacheren Aufbau aufweist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: Funktionsblöcke einer Antriebsvorrichtung für ein Stellglied,
- Fig. 2: ein Federelement der Antriebsvorrichtung,
- Fig. 3: einen Ausschnitt der Antriebsvorrichtung mit dem eingebauten Federelement, und
- Fig. 4: eine Variante der Antriebsvorrichtung in Funktionsblockdarstellung.

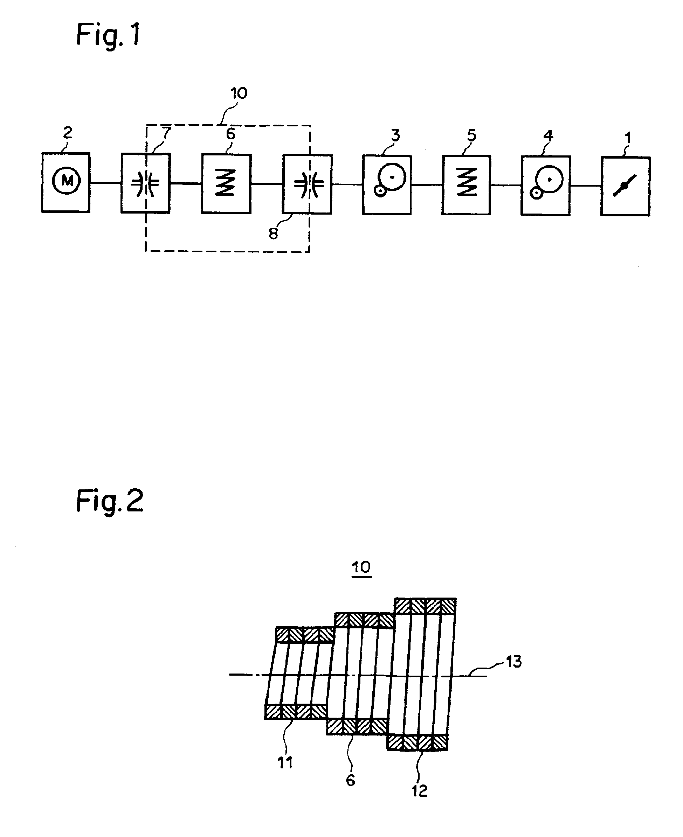

In der Fig. 1 bedeutet 1 ein Stellglied, welches über eine Antriebsvorrichtung zwischen zwei Endlagen betätigbar ist. Ist das Stellglied 1 beispielsweise eine Luftklappe, hat eine erste Endlage die maximale Durchlassöffnung und eine zweite Endlage die minimale Durchlassöffnung zur Folge, wobei die minimale Durchlassöffnung in der Regel eine vollständig geschlossene Luftklappe bedeutet.

Die Antriebsvorrichtung weist einen Elektromotor 2, Getriebestufen 3 und 4 sowie eine mit Vorteil zwischen den Getriebestufen 3 und 4 angeordnete Rückstellfeder 5 auf. Die Rückstellfeder 5 ist ein Energiespeicher, durch dessen Energie das Stellglied 1 bei einem Ausfall des elektrischen Versorgungsnetzes in eine vorbestimmte Sicherheitsstellung positionierbar ist. Die Sicherheitsstellung entspricht einer der beiden Endlagen des Stellgliedes 1 und ist in der Regel konfigurierbar.

Zwischen dem Elektromotor 2 und einer ersten Getriebestufe 3 ist eine Hilfsfeder 6 angeordnet, wobei die Hilfsfeder 6 in vorteilhafter Art einerseits über eine erste Schraubenfederkupplung 7 mit dem Elektromotor 2 und andrerseits über eine zweite Schraubenfederkupplung 8 mit der Getriebestufe 3 verbunden ist.

Die Hilfsfeder 6 weist freie Windungen zur Generierung eines Antriebstosses auf, durch den bekannterweise Haftmomente insbesondere der Getriebestufe 3, aber auch ein magnetisches Rastmoment des Elektromotors 2 überwindbar sind.

Die beiden Schraubenfederkupplungen 7 und 8 sind auf die Drehrichtung des Elektromotors 2 abgestimmt und derart ausgeführt, dass eine der beiden Schraubenfederkupplungen 7 oder 8 als Freilaufkupplung wirksam wird, wenn das Stellglied 1 die vorbestimmte Sicherheitsstellung erreicht und die andere der beiden Schraubenfederkupplungen 7 oder 8 als Überlastkupplung wirksam wird, wenn das Stellglied 1 eine weitere vorbestimmte Stellung erreicht.

In der Fig. 2 ist die Hilfsfeder 6 eine zweite Stufe eines vorteilhafterweise dreistufig ausgeführten Federelements 10. Ein erstes mehrere Windungen aufweisendes Ende 11 der Hilfsfeder 6 ist als erste Stufe und ein zweites mehrere Windungen aufweisendes Ende 12 der Hilfsfeder ist als dritte Stufe des Federelements 10 ausgeführt.

Die erste Stufe des Federelements 10 ist derart ausgebildet und um einen in einer Drehachse 13 drehbar angeordneten Körper schlingbar, dass das erste Ende 11 zusammen mit dem Körper als Schlingfederkupplung funktioniert. Die dritte Stufe des Federelements 10 hingegen ist derart ausgeführt und in eine axial in der Drehachse 13 liegende Bohrung eines weiteren drehbaren Körpers einsetzbar, dass das zweite Ende 12 zusammen mit dem weiteren Körper als Spreizfederkupplung arbeitet.

Das Federelement 10 ist einstückig in einem Wickelsinn gewickelt, wobei der Querschnitt des beim Wickeln verwendeten Materials je nach Anforderung rechteckig oder rund gewählt wird.

Durch die Wahl des Wickelsinns - also Drall nach rechts oder Drall nach links - wird bestimmt, bei welchem Drehsinn die Schlingfederkupplung und die Spreizfederkupplung lösbar sind. Dadurch, dass das Federelement einerseits eine Schlingfeder und andrerseits eine Spreizfeder aufweist, ist jeweils in jeder Drehrichtung eine der beiden Schraubenfederkupplungen 7 oder 8 lösbar.

Da bekannterweise bei der Schlingfederkupplung und bei der Spreizfederkupplung unter anderem jeweils durch das Verhältnis zwischen Materialdurchmesser und Wicklungsdurchmesser auch das notwendige Drehmoment und dessen Toleranzbereich definiert sind, bei dem die Schraubenfederkupplung lösbar ist, wird durch die anforderungsgerechte Dimensionierung der Geometrie des Federelements 10 das Kupplungsverhalten der Antriebsvorrichtung in beiden Drehsinnen auf einfache Art in weiten Grenzen an konkrete Anforderungen anpassbar.

Die Windungsdurchmesser der drei - vorteilhafterweise zylindrisch - gewickelten und hintereinander angeordneten Stufen 11, 6 und 12 sind mit Vorteil voneinander verschieden, wobei die als Schlingfeder koppelbare erste Stufe 11 mit Vorteil den kleinsten Windungsdurchmesser aufweist, und die als Spreizfeder koppelbare dritte Stufe 12 vorteilhafterweise den grössten Windungsdurchmesser aufweist. Dadurch dass der Windungsdurchmesser der Hilfsfeder 6 verschieden vom Windungsdurchmesser der ersten Stufe 11 und auch verschieden vom Windungsdurchmesser der dritten Stufe 12 ist, sind Verschleisserscheinungen am Federelement und an den mit dem Federelement 10 gekoppelten Körpern minimierbar.

Dadurch, dass die Windungsdurchmesser der ersten Stufe 11 und der dritten Stufe 12 unterschiedlich sind, wird der Vorteil erreicht, dass die beiden mit dem Federelement 10 koppelbaren, in der gemeinsamen Drehachse 13 axial zueinander angeordneten Körper grundsätzlich näher beieinander angeordnet werden können, was insgesamt eine kompaktere Bauweise der Antriebsvorrichtung erlaubt.

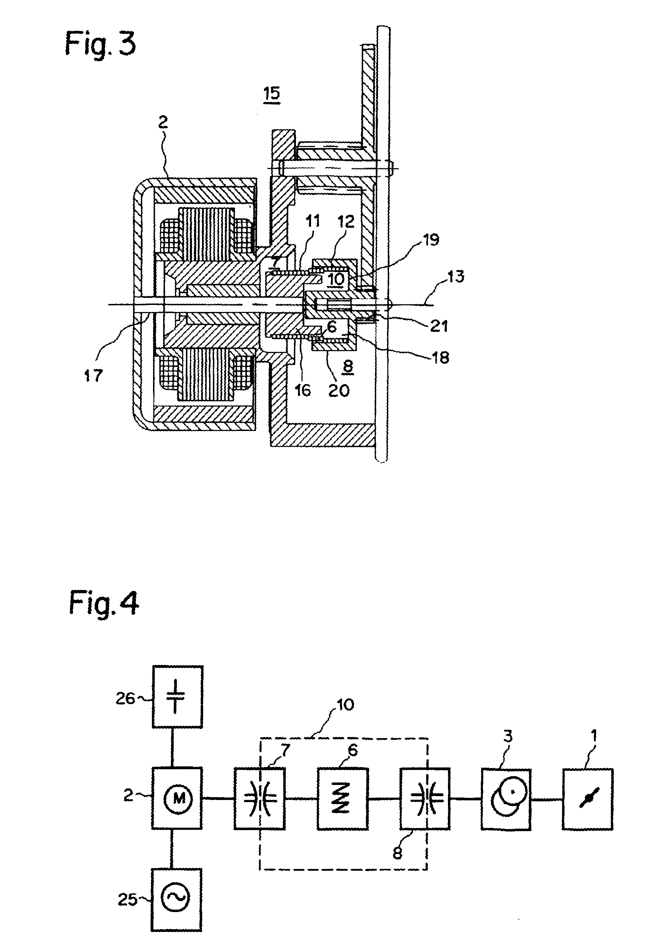

In der Fig. 3 ist die Hilfsfeder 6 in einer der Übersichtlichkeit halber nur teilweise dargestellten Antriebsvorrichtung 15 angeordnet. Das erste Ende 11 ist um eine Nabe 16 gewunden, welche mit einer Antriebsachse 17 des Elektromotors 2 fest verbunden ist. Das zweite Ende 12 ist derart in einer Ausnehmung 18 einer Trommel 19 angeordnet, dass die Wicklung von innen her an eine Aussenwand 20 der Trommel 19 anliegt. Die erste Schraubenfederkupplung 7 wird durch die Nabe 16 und das erste Ende 11 verwirklicht, während die zweite Schraubenfederkupplung 8 durch das zweite Ende 12 und die Trommel 19 realisiert ist.

Dadurch, dass das Federelement 10 über die Nabe 16 mit der Antriebsachse 17 verbunden ist, kann das von der ersten Schraubenfederkupplung 7 übertragbare Drehmoment durch die Wahl des äusseren Durchmessers der Nabe 16 in weiten Grenzen anforderungsgerecht festgelegt werden. Es versteht sich von selbst, dass das Federelement 10 in einer Ausführungsvariante der Schraubenfederkupplung 7 direkt um die Antriebsachse 17 schlingbar ist.

Beispielhaft ist die Trommel 19 durch ein Ritzel 21 abgeschlossen, welches Teil der Getriebestufe 3 (Fig. 1) ist.

In einer in der Fig. 4 dargestellten Ausführungsvariante bezeichnet 25 eine von einem Versorgungsnetz gespeiste Spannungsquelle, durch deren Energie der Elektromotor 2 in einem normalen Betriebszustand der Antriebsvorrichtung 15 antreibbar ist. Anstelle einer Rückstellfeder weist die Ausführungsvariante einen elektrischen Energiespeicher 26 auf. Die im elektrischen Energiespeicher 26 gespeicherte Energie ist so bemessen, dass sie ausreicht, um das Stellglied 1 bei einem Ausfall des elektrischen Versorgungsnetzes über den Elektromotor in die vorbestimmte Sicherheitsstellung zu positionieren.

Der elektrische Energiespeicher 26 ist beispielsweise eine Batterie, ein Akkumulator oder ein Kondensator. Die Ausführungsvariante benötigt eine Schaltung, durch welche ein Netzausfall detektierbar und die Positionierung in die Sicherheitsstellung einleitbar ist.

Die beiden Schraubenfederkupplungen 7 und 8 sind auf die Drehrichtung des Elektromotors 2 abgestimmt und derart ausgeführt, dass eine der beiden Schraubenfederkupplungen 7 oder 8 als Freilaufkupplung wirksam wird, wenn das Stellglied 1 die vorbestimmte Sicherheitsstellung erreicht und die andere der beiden Schraubenfederkupplungen 7 oder 8 als Überlastkupplung wirksam wird, wenn das Stellglied 1 eine weitere vorbestimmte Stellung erreicht.

Durch die Verwendung des Federelementes 10, durch welches die Freilaufkupplung und die Überlastkupplung mit wenig Aufwand realisierbar sind, sind Schäden insbesondere an den Getriebestufen 3 und 4 auch dann vermeidbar, wenn das Stellglied 1 in den Endlagen hart auf einen Anschlag aufläuft.

## Patentansprüche

1. Antriebsvorrichtung für ein Stellglied (1),
mit einem Elektromotor (2),
mit einem Energiespeicher (5; 26), durch dessen Energie das Stellglied (1) bei einem Ausfall des elektrischen Versorgungsnetzes in eine vorbestimmte Sicherheitsstellung positionierbar ist, und mit einer Hilfsfeder (6) mit freien Windungen zur Generierung eines Antriebstosses, wobei die Hilfsfeder (6) an einem ihrer beiden Enden (11; 12) als Schlingfeder ausgeführt ist und
wobei die Hilfsfeder (6) mechanisch derart angeordnet und einkoppelbar ist, dass eine erste Kopplung der Hilfsfeder als Freilaufkupplung wirksam wird, wenn das Stellglied die vorbestimmte Sicherheitsstellung erreicht,
**dadurch gekennzeichnet,**
dass das andere Ende der Hilfsfeder (12; 11) als Spreizfeder ausgeführt ist und
dass die Hilfsfeder (6) derart angeordnet und einkoppelbar ist, dass eine zweite Kopplung der Hilfsfeder als Überlastkupplung wirksam wird, wenn das Stellglied (1) eine weitere vorbestimmte Stellung erreicht.

2. Antriebsvorrichtung nach Anspruch 1, **dadurch gekennzeichnet,**
dass ein die Hilfsfeder (6) aufweisendes Federelement (10) drei zylindrisch gewickelte und hintereinander angeordnete Stufen (11; 6; 12) aufweist, wobei, die Windungsdurchmesser der Stufen (11; 6; 12) voneinander verschieden sind,
dass eine als Schlingfeder mit einer Achse (17) koppelbare Stufe (11) den kleinsten Windungsdurchmesser aufweist, und dass eine als Spreizfeder mit einer Trommel (19) koppelbare Stufe (12) den grössten Durchmesser aufweist.

3. Antriebsvorrichtung einem vorangehenden Anspruch, **dadurch gekennzeichnet,**
dass die Hilfsfeder (6) durch das als Schlingfeder ausgeführte Ende (11) der Hilfsfeder (6) antriebsmässig auf der Seite des Elektromotors (2) angeordnet ist.

4. Antriebsvorrichtung nach Anspruch 1 oder 2, **dadurch gekennzeichnet,**
dass die Hilfsfeder (6) durch das als Spreizfeder ausgeführte Ende (12) der Hilfsfeder (6) antriebsmässig auf der Seite des Elektromotors (2) angeordnet ist.
